# EUROPEAN PATENT SPECIFICATION

(11) **EP 4 029 897 B1**
(45) Date of publication and mention of the grant of the patent: **18.12.2024**
(21) Application number: 19944961.2
(22) Date of filing: 12.09.2019
(51) Int. Cl.: C08G 59/50, B29B 15/08, C08G 59/28, C08G 59/32, C08G 59/38, C08J 5/04

(54) **EPOXY RESIN COMPOSITION, RESIN CURED PRODUCT, FIBER-REINFORCED COMPOSITE MATERIAL, AND PRODUCTION METHODS THEREFOR**
EPOXIDHARZZUSAMMENSETZUNG, GEHÄRTETES HARZPRODUKT, FASERVERSTÄRKTES VERBUNDMATERIAL UND HERSTELLUNGSVERFAHREN DAFÜR
COMPOSITION DE RÉSINE ÉPOXYDE, PRODUIT DURCI EN RÉSINE, MATÉRIAU COMPOSITE RENFORCÉ PAR DES FIBRES, ET PROCÉDÉS DE PRODUCTION ASSOCIÉS

(43) Date of publication of application: 20.07.2022
(73) Proprietor: Teijin Limited, Osaka 530-0005 (JP)
(72) Inventor: OZAWA, Suguru, Osaka-shi, Osaka 530-0005 (JP); KONEKO, Toru, Osaka-shi, Osaka 530-0005 (JP); OSAKI, Kohei, Osaka-shi, Osaka 530-0005 (JP)
(74) Representative: Carpmaels & Ransford LLP
(86) International application number: PCT/JP2019/035866
(87) International publication number: WO 2021/048969

(56) References cited:
- WO-A1-2009/119467
- WO-A1-2012/102201
- WO-A1-2017/056653
- JP-A- 2009 227 907
- JP-A- 2009 280 669
- JP-A- 2010 163 504
- JP-A- 2012 041 486
- JP-A- 2012 067 190
- JP-A- 2013 159 618
- JP-A- 2014 227 473
- US-A1- 2011 097 568
- US-A1- 2015 315 331
- US-A1- 2017 327 657

## Description

### Technical Field

The present invention relates to an epoxy resin composition, a cured resin, a fiber-reinforced composite material, and methods for producing them. More specifically, the present invention relates to an epoxy resin composition that is capable of providing a fiber-reinforced composite material having excellent heat resistance, compression properties, and impact resistance, and that has a low viscosity and a long pot life, a cured resin produced using the epoxy resin composition, a fiber-reinforced composite material produced using the epoxy resin composition, and methods for producing them.

### Background Art

Fiber-reinforced composite materials (hereinafter sometimes referred to as "FRPs") are lightweight and have high strength and high rigidity, and are therefore used in a wide range of fields such as sports and leisure applications including fishing rods and golf shafts, and industrial applications including automobiles and aircraft. As for a method for producing a composite material containing a thermosetting resin as a matrix resin by molding, there are known, for example, a resin transfer molding (RTM) method in which a liquid resin composition is impregnated into a fiber-reinforced material placed in a mold and cured to produce a fiber-reinforced composite material, and a method in which a fiber-reinforced material is impregnated with a resin in advance to form a sheet-shaped prepreg (intermediate base material).

In recent years, among the above-mentioned methods, the RTM method has attracted attention. The RTM method is a low-cost and highly productive production method that requires few steps for producing a fiber-reinforced composite material and does not require expensive equipment such as an autoclave. The matrix resin used in the RTM method has a composition mainly containing an epoxy resin and a curing agent, and optionally containing other additives. In order to produce a cured product or a fiber-reinforced composite material having high mechanical properties, it is common to use an aromatic polyamine as a curing agent.

As for the epoxy resin composition used in the RTM method, the curing agent is often used in a state of being dissolved in the epoxy resin so as not to be filtered off during impregnation of the resin composition into a reinforcing fiber base material. In this case, since the curing agent is present in a state of being dissolved in the epoxy resin, the epoxy resin and the curing agent relatively easily react with each other, and there is a problem that the resin composition has a short pot life.

In order to prolong the pot life of the resin composition, for example, Patent Literature 1 proposes use of a hindered amine curing agent having low reactivity. Use of the hindered amine curing agent, however, causes a problem that the resulting cured product or fiber-reinforced composite material has lower mechanical properties.

In addition, a fiber-reinforced composite material containing an epoxy resin as a matrix resin generally has low impact resistance, and therefore a cured epoxy resin is required to be improved in toughness. Patent Literature 2 describes a method of dissolving a thermoplastic resin in an epoxy resin to impart toughness to a cured epoxy resin. This method can impart a certain degree of toughness to the cured epoxy resin. However, in order to impart high toughness, it is necessary to dissolve a large amount of thermoplastic resin in the epoxy resin. As a result, the epoxy resin composition in which a large amount of thermoplastic resin is dissolved has a remarkably high viscosity, and it is difficult to impregnate the inside of a reinforcing fiber base material with a sufficient amount of resin. Therefore, a fiber-reinforced composite material produced using such an epoxy resin composition inherently has many defects such as voids. As a result, the fiber-reinforced composite material structure has problems that it may have deteriorated compression performance, damage tolerance, and the like.

### Citation List

### Patent Literatures

Patent Literature 1: JP 2014-148572 A
Patent Literature 2: JP 60-243113 A. US2011097568A1 relates to an epoxy resin composition for use as a matrix resin of fiber-reinforced composite materials suitable for producing structural parts of aircraft, spacecraft, vehicles, ships, and the like. US2017327657A1 relates to a prepreg and a carbon fiber-reinforced composite material suitably used for aircraft members, spacecraft members, automobile members, ship members, sporting goods such as golf shafts and fishing rods, and other general industrial applications. US2015315331A1 relates to an epoxy resin composition, prepreg, and carbon fiber reinforced composite material.

### Summary of Invention

### Technical Problems

An object of the present invention is to provide an epoxy resin composition that solves the above-mentioned problems of the prior art, can provide a cured resin having excellent properties, has high impregnation properties into a fiber-reinforced material, and is excellent in handleability. Another object of the present invention is to provide a fiber-reinforced composite material (hereinafter sometimes abbreviated as "FRP", and particularly when the fiber-reinforced composite material contains a fiber-reinforced material made of carbon fibers, sometimes abbreviated as "CFRP") produced using the epoxy resin composition.

### Solution to Problems

The invention is defined by the appended claims. As a result of studies to solve the above-mentioned problems, the present inventors have found that use of an epoxy resin composition containing a combination of predetermined epoxy resins, a curing agent, and a particulate rubber component can solve the above-mentioned problems, and have completed the present invention.
[1] An epoxy resin composition containing:
   an epoxy resin [A] that is a compound represented by Chemical formula (1) shown below: 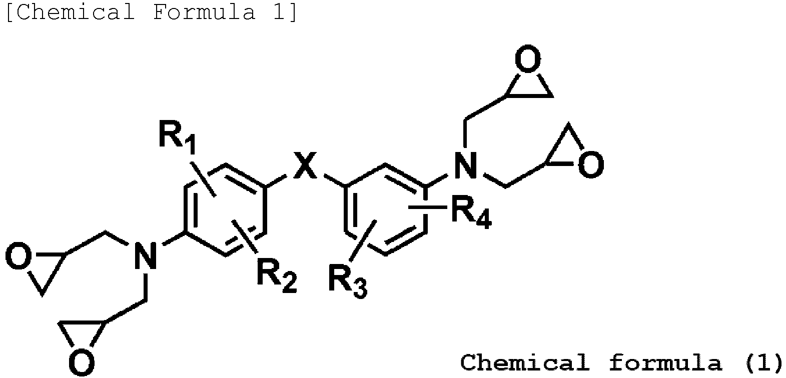
   wherein R₁ to R₄ each independently represent one selected from the group consisting of a hydrogen atom, an aliphatic hydrocarbon group, an alicyclic hydrocarbon group, and a halogen atom, and X is -O-;
   a bifunctional epoxy resin [B] having an amine type glycidyl group;
   a curing agent [C] containing an aromatic polyamine, and having at least one substituent selected from an aliphatic substituent, an aromatic substituent, and a halogen atom at an ortho position with respect to an amino group; and
   a particulate rubber component [D].
[2] The epoxy resin composition according to the item [1], containing an epoxy resin [E] containing a triglycidylaminophenol derivative.
[3] The epoxy resin composition according to the item 1] or [2], wherein the bifunctional epoxy resin [B] is diglycidyl aniline or diglycidyl-o-toluidine.
[4] The epoxy resin composition according to any one of the items [1] to [3], wherein the curing agent [C] is a 4,4'-diaminodiphenyl methane derivative and/or a phenylenediamine derivative.
[5] The epoxy resin composition according to any one of the items [1] to [4], wherein the curing agent [C] is a 4,4'-diaminodiphenyl methane derivative.
[6] The epoxy resin composition according to any one of the items [2] to [5], wherein the epoxy resin [E] is triglycidyl-p-aminophenol or triglycidyl-m-aminophenol.
[7] The epoxy resin composition according to any one of the items [1] to [6], wherein a percentage content of the bifunctional epoxy resin [B] in all epoxy resins is 5 to 40 mass%.
[8] The epoxy resin composition according to any one of the items [1] to [7], wherein the epoxy resin [A] is tetraglycidyl-3,4'-diaminodiphenyl ether.
[9] A cured resin that is a cured product of the epoxy resin composition according to any one of the items [1] to [8].
[10] A fiber-reinforced composite material containing:
   the cured resin according to the item [9], the cured resin being the cured product of the epoxy resin composition; and
   a fiber-reinforced material.
[11] The fiber-reinforced composite material according to the item [10], wherein the fiber-reinforced material is a carbon fiber-reinforced material.
[12] A method for producing a fiber-reinforced composite material, the method including forming a fiber-reinforced material and the epoxy resin composition according to any one of the items [1] to [8] into a composite, and curing the epoxy resin composition.
[13] A method for producing a fiber-reinforced composite material, the method including a step of impregnating a fiber-reinforced material placed in a mold with the epoxy resin composition according to any one of the items [1] to [8], and then thermally curing the epoxy resin composition.

### Advantageous Effects of Invention

The epoxy resin composition of the present invention can provide a cured resin having excellent properties. In addition, since the epoxy resin composition of the present invention has a low viscosity, a long pot life, and high handleability, the epoxy resin composition can provide an FRP having excellent properties.

### Description of Embodiments

Hereinafter, details of the epoxy resin composition, the fiber-reinforced composite material, and the methods for producing them according to the present invention will be described.

### 1. Epoxy resin composition

The epoxy resin composition of the present invention contains at least an epoxy resin [A] that is a compound represented by Chemical formula (1), a bifunctional epoxy resin [B] having an amine type glycidyl group, a curing agent [C] containing an aromatic polyamine, and having at least one substituent selected from an aliphatic substituent, an aromatic substituent, and a halogen atom at an ortho position with respect to an amino group, and a particulate rubber component [D]. The epoxy resin composition of the present invention may contain, in addition to these components, other epoxy resins, thermosetting resins, thermoplastic resins, curing agents, and other additives.

The epoxy resin composition of the present invention preferably has a viscosity at 100°C of 300 mPa·s or less. The viscosity is more preferably 0.1 to 200 mPa·s, and still more preferably 0.5 to 100 mPa·s. If the viscosity at 100°C is more than 300 mPa·s, it is difficult to impregnate the reinforcing fiber base material with the epoxy resin composition. As a result, voids and the like are easily formed in the obtained fiber-reinforced composite material, and the fiber-reinforced composite material is deteriorated in physical properties. The relation between the viscosity and the impregnation properties depends also on the configuration of the reinforcing fiber base material, and the epoxy resin composition may sometimes be satisfactorily impregnated into the reinforcing fiber base material even when the resin composition has a viscosity outside the above-mentioned range.

The pot life of the epoxy resin composition varies depending on the conditions for molding the epoxy resin composition into the composite material. For example, when the epoxy resin composition is impregnated into the fiber base material at a relatively low impregnation pressure using a resin transfer molding method (RTM method) to produce a large composite material, the pot life, that is, the time until the epoxy resin composition held at 100°C comes to have a viscosity more than 150 mPa·s, is preferably 60 minutes or more, more preferably 180 minutes or more, and still more preferably 300 minutes or more.

The cured resin obtained by curing the epoxy resin composition of the present invention preferably has a glass transition temperature after water absorption of 120°C or more, and more preferably 150 to 200°C. The cured resin obtained by curing the epoxy resin composition of the present invention preferably has a glass transition temperature of 150°C or more, more preferably 180°C or more, and still more preferably 200°C or more.

The cured resin obtained by curing the epoxy resin composition of the present invention preferably has a flexural modulus of 3.0 GPa or more, more preferably 3.5 to 30 GPa, and still more preferably 4.0 to 20 GPa as measured by the method of JIS K 7171. If the flexural modulus is less than 3.0 GPa, the fiber-reinforced composite material obtained using the epoxy resin composition of the present invention is easily deteriorated in properties.

### 1-1. Epoxy resin [A]

The epoxy resin composition of the present invention contains the epoxy resin [A] represented by Chemical formula (1) shown below: 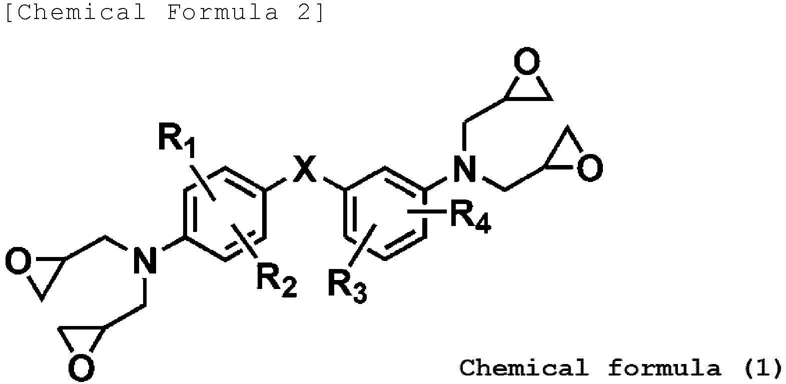
wherein R₁ to R₄ each independently represent one selected from the group consisting of a hydrogen atom, an
aliphatic hydrocarbon group, an alicyclic hydrocarbon group, and a halogen atom, and X is -O-.

When each of R₁ to R₄ is an aliphatic hydrocarbon group or an alicyclic hydrocarbon group, the group preferably has 1 to 4 carbon atoms.

The epoxy resin [A] is tetraglycidyl-3,4'-diaminodiphenyl ether. Each of R₁ to R₄ is preferably a hydrogen atom because formation of a special three-dimensional structure of the cured resin is hardly inhibited. In addition, X is -O- because synthesis of the compound is facilitated.

The epoxy resin [A] may be synthesized by any method. For example, the epoxy resin [A] is obtained by reacting, as raw materials, an aromatic diamine with an epihalohydrin such as epichlorohydrin to produce a tetrahalohydrin product, and then subjecting the tetrahalohydrin product to a cyclization reaction using an alkaline compound. More specifically, the epoxy resin [A] can be synthesized by the method in the section of Examples described later.

Examples of the epihalohydrin include epichlorohydrin, epibromohydrin, and epifluorohydrin. Among them, epichlorohydrin and epibromohydrin are particularly preferred from the viewpoint of reactivity and handleability.

The mass ratio between the aromatic diamine and the epihalohydrin as raw materials is preferably 1 : 1 to 1 : 20, and more preferably 1 : 3 to 1 : 10. Examples of the solvent used in the reaction include alcohol solvents such as ethanol and n-butanol, ketone solvents such as methyl isobutyl ketone and methyl ethyl ketone, aprotic polar solvents such as acetonitrile and N,N-dimethylformamide, and aromatic hydrocarbon solvents such as toluene and xylene. In particular, alcohol solvents such as ethanol and n-butanol, and aromatic hydrocarbon solvents such as toluene and xylene are preferred. The amount of the solvent used is preferably 1 to 10 mass times the amount of the aromatic diamine. As an acid catalyst, either a Brønsted acid or a Lewis acid can be suitably used. The Brønsted acid is preferably ethanol, water, or acetic acid, and the Lewis acid is preferably titanium tetrachloride, lanthanum nitrate hexahydrate, or a boron trifluoride-diethyl ether complex.

The reaction time is preferably 0.1 to 180 hours, and more preferably 0.5 to 24 hours. The reaction temperature is preferably 20 to 100°C, and more preferably 40 to 80°C.

Examples of the alkaline compound used in the cyclization reaction include sodium hydroxide and potassium hydroxide. The alkaline compound may be added either as a solid or as an aqueous solution.

A phase transfer catalyst may be used during the cyclization reaction. Examples of the phase transfer catalyst include quaternary ammonium salts such as tetramethylammonium chloride, tetraethylammonium bromide, benzyltriethylammonium chloride, and tetrabutylammonium hydrogen sulfate, phosphonium compounds such as tributylhexadecylphosphonium bromide and tributyldodecylphosphonium bromide, and crown ethers such as 18-crown-6-ether.

The epoxy resin [A] used in the present invention preferably has a viscosity at 50°C of less than 50 Pa·s. The viscosity is more preferably less than 10 Pa·s, still more preferably less than 5.0 Pa·s, and particularly preferably less than 2.0 Pa·s.

In the epoxy resin composition of the present invention, the percentage of the epoxy resin [A] in the total amount of epoxy resins is preferably 10 to 100 mass%, more preferably 20 to 90 mass%, and still more preferably 30 to 80 mass%. If the percentage of the epoxy resin [A] is less than 10 mass%, the resulting cured resin may be deteriorated in heat resistance and elastic modulus. As a result, the obtained fiber-reinforced composite material may be deteriorated in various physical properties.

### 1-2. Epoxy resin [B]

The epoxy resin composition of the present invention contains the bifunctional epoxy resin [B] having an amine type glycidyl group.

The epoxy resin [B] reduces the viscosity of the epoxy resin composition to improve the resin impregnation properties into the reinforcing fiber base material. In addition, since the epoxy resin [B] increases the pot life, the epoxy resin [B] increases the degree of freedom in designing a mold used in the RTM method.

The epoxy resin [B] is not particularly limited as long as it is a bifunctional epoxy resin having an amine type glycidyl group. However, it is preferred to use diglycidyl aniline or a derivative thereof, such as diglycidyl-o-toluidine, diglycidyl-m-toluidine, diglycidyl-p-toluidine, diglycidyl-xylidine, diglycidyl-mesidine, diglycidyl-anisidine, diglycidyl-phenoxyaniline, or diglycidyl-naphthylamine, or a derivative thereof. It is more preferred to use diglycidyl aniline, diglycidyl-o-toluidine, diglycidyl-m-toluidine, diglycidyl-p-toluidine, or diglycidyl-phenoxyaniline, and it is still more preferred to use diglycidyl aniline or diglycidyl-o-toluidine.

In the epoxy resin composition of the present invention, the percentage content of the epoxy resin [B] in all epoxy resins is preferably 3 to 50 mass%, more preferably 3 to 40 mass%, and particularly preferably 5 to 40 mass%. Setting the percentage content of the epoxy resin [B] in all the epoxy resins within the above-mentioned range makes it possible to produce an epoxy resin composition having a viscosity and a pot life suitable for the RTM method.

### 1-3. Curing agent [C]

The epoxy resin composition of the present invention contains the curing agent [C] containing an aromatic polyamine, and having at least one of the substituents among an aliphatic substituent, an aromatic substituent, and a halogen atom at an ortho position with respect to an amino group. That is, the curing agent [C] is a compound represented, for example, by Chemical formula (2) or (3) shown below.

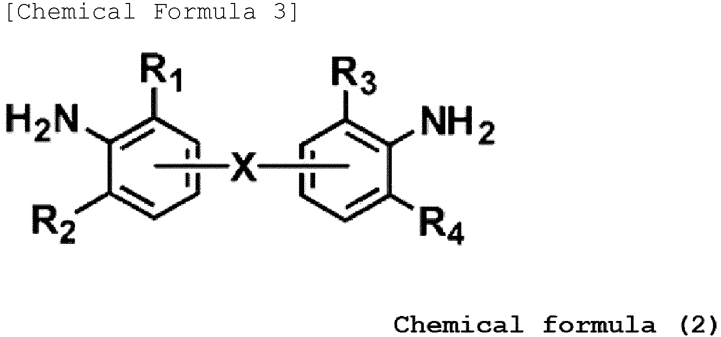

In Chemical Formula (2), R₁ to R₄ are each independently any one of a hydrogen atom, an aliphatic substituent having 1 to 6 carbon atoms, an aromatic substituent, and a halogen atom, and at least one of the substituents is any one of an aliphatic substituent having 1 to 6 carbon atoms, an aromatic substituent, and a halogen atom. X is -O- .

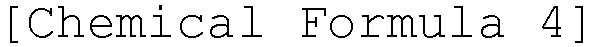

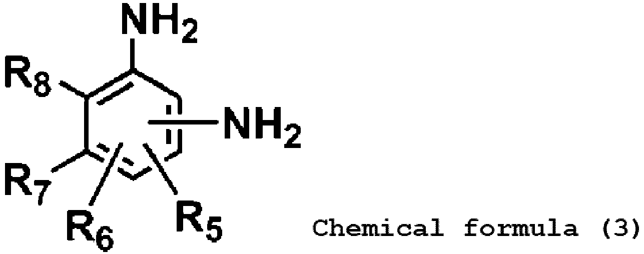

In Chemical Formula (3), R₅ to R₈ are each independently any one of a hydrogen atom, an aliphatic substituent, an aromatic substituent, and a halogen atom, and at least one of the substituents is any one of an aliphatic substituent having 1 to 6 carbon atoms, an aromatic substituent, and a halogen atom. Said one of the substituents is preferably an aliphatic substituent having 1 to 6 carbon atoms.

In Chemical formulae (2) and (3), the number of carbon atoms of the aliphatic substituent is preferably 1 to 6.

Examples of the aliphatic substituent include a methyl group, an ethyl group, a propyl group, an isopropyl group, a n-butyl group, a sec-butyl group, a tert-butyl group, a n-pentyl group, a neopentyl group, a n-hexyl group, and a cyclohexyl group.

Examples of the aromatic substituent include a phenyl group and a naphthyl group.

The curing agent [C] may be any polyamine having the above-mentioned structure. Specific examples of the curing agent [C] include 4,4'-diaminodiphenyl methane, and derivatives thereof that are represented by Chemical formulae (4) to (7) shown below; and phenylenediamines and derivatives thereof, which are represented by Chemical formulae (8) and (9) shown below.

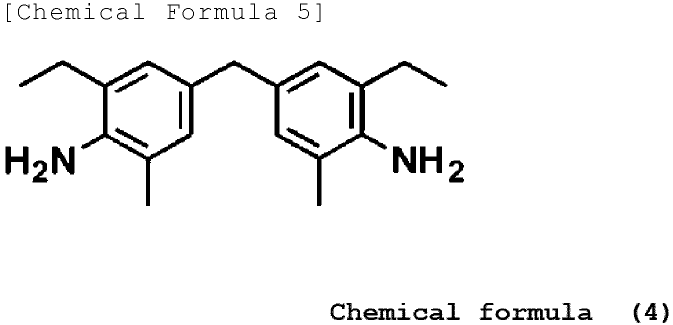

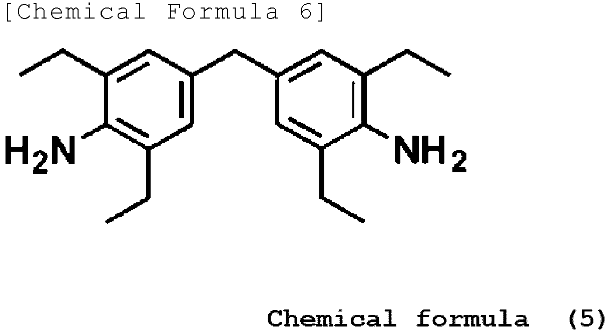

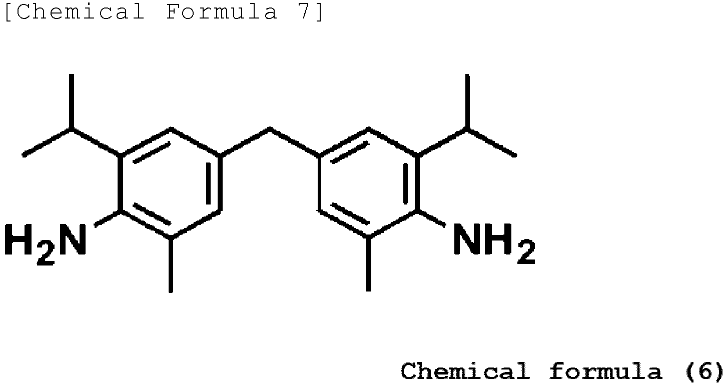

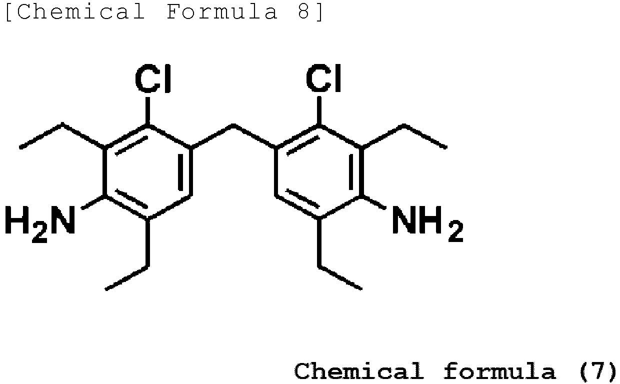

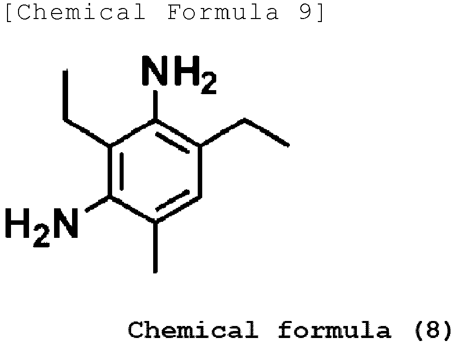

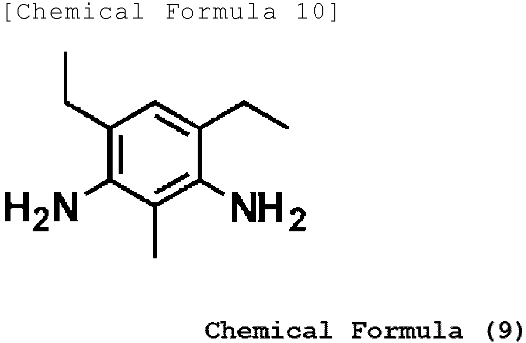

The content of the curing agent [C] in the epoxy resin composition of the present invention is preferably 20 to 100 parts by mass, and more preferably 30 to 80 parts by mass with respect to 100 parts by mass of all the epoxy resins contained in the epoxy resin composition. If the content of the curing agent [C] is less than 20 parts by mass or more than 100 parts by mass, the epoxy resin composition is insufficiently cured, so that the cured resin is easily deteriorated in physical properties.

### 1-4. Particulate rubber component [D]

The epoxy resin composition of the present invention contains the particulate rubber component [D]. In the present invention, the term "particulate" means that the rubber component is dispersed in the epoxy resin composition without being dissolved therein, and the rubber component is dispersed to form an island component also in a cured resin obtained after the epoxy resin composition is cured.

The particulate rubber component [D] improves the fracture toughness and impact resistance of the cured resin and the fiber composite material.

Examples of the particulate rubber component [D] include silicone rubber, butadiene rubber, styrene-butadiene rubber, and methyl methacrylate-butadiene-styrene rubber.

The particulate rubber component [D] preferably has an average particle size of 1 µm or less. The average particle size is more preferably 0.5 µm or less, and still more preferably 0.3 µm or less. The lower limit of the average particle size is not particularly limited, but is preferably 0.03 µm or more, more preferably 0.05 µm or more, and still more preferably 0.08 µm or more. If the average particle size is more than 1 µm, the particulate rubber component is filtered at the surface of the reinforcing fiber base material in the step of impregnating the reinforcing fiber base material with the epoxy resin composition, so that the particulate rubber component is hardly impregnated into the inside of the reinforcing fiber bundle. As a result, poor impregnation of the resin may occur, and the obtained fiber-reinforced composite material is deteriorated in physical properties.

The content of the particulate rubber component [D] in the epoxy resin composition of the present invention is preferably 0.1 to 50 mass%, more preferably 0.5 to 20 mass%, and still more preferably 1 to 15 mass% with respect to the total amount of the epoxy resin composition. If the content of the particulate rubber component [D] is less than 0.1 mass%, the fracture toughness and impact resistance of the cured resin and the fiber composite material are not sufficiently improved.

A masterbatch containing the particulate rubber component [D] dispersed at a high concentration in an epoxy resin can also be used. In this case, it is easy to highly disperse the rubbery component in the epoxy resin composition.

Examples of commercially available products of the particulate rubber component [D] include MX-153 (a single dispersion of 33 mass% butadiene rubber in a bisphenol A epoxy resin, manufactured by KANEKA CORPORATION), MX-257 (a single dispersion of 37 mass% butadiene rubber in a bisphenol A epoxy resin, manufactured by KANEKA CORPORATION), MX-154 (a single dispersion of 40 mass% butadiene rubber in a bisphenol A epoxy resin, manufactured by KANEKA CORPORATION), MX-960 (a single dispersion of 25 mass% silicone rubber in a bisphenol A epoxy resin, manufactured by KANEKA CORPORATION), MX-136 (a single dispersion of 25 mass% butadiene rubber in a bisphenol F epoxy resin, manufactured by KANEKA CORPORATION), MX-965 (a single dispersion of 25 mass% silicone rubber in a bisphenol F epoxy resin, manufactured by KANEKA CORPORATION), MX-217 (a single dispersion of 25 mass% butadiene rubber in a phenol novolac epoxy resin, manufactured by KANEKA CORPORATION), MX-227M75 (a single dispersion of 25 mass% styrene-butadiene rubber in a bisphenol A novolac epoxy resin, manufactured by KANEKA CORPORATION), MX-334M75 (a single dispersion of 25 mass% styrene-butadiene rubber in a brominated epoxy resin, manufactured by KANEKA CORPORATION), MX-416 (a single dispersion of 25 mass% butadiene rubber in a tetrafunctional glycidyl amine epoxy resin, manufactured by KANEKA CORPORATION), and MX-451 (a single dispersion of 25 mass% styrene-butadiene rubber in a trifunctional glycidyl amine epoxy resin, manufactured by KANEKA CORPORATION).

### 1-5. Epoxy resin [E]

The epoxy resin composition of the present invention may contain an epoxy resin other than the epoxy resins [A] and [B]. Such other epoxy resin is not particularly limited, but the epoxy resin composition preferably contains the epoxy resin [E] that is a triglycidylaminophenol derivative.

The epoxy resin [E] reduces the viscosity of the epoxy resin composition, and improves the heat resistance of the cured resin. Therefore, combination use of the epoxy resin [A] and the epoxy resin [E] improves the resin impregnation properties into the reinforcing fiber base material, and provides a cured resin and a fiber-reinforced composite material that maintain heat resistance and a high elastic modulus.

Examples of the epoxy resin [E] include triglycidyl-m-aminophenol and triglycidyl-p-aminophenol.

In the epoxy resin composition of the present invention, the percentage content of the epoxy resin [E] in all epoxy resins is preferably 1 to 30 mass%, and more preferably 3 to 20 mass%. Setting the percentage content of the epoxy resin [E] in all the epoxy resins within the above-mentioned range makes it possible to produce an epoxy resin composition having a viscosity suitable for the RTM method, and to provide a cured resin having high heat resistance.

### 1-6. Other optional components

The epoxy resin composition of the present invention essentially contains the epoxy resin [A], the epoxy resin [B], the curing agent [C], and the particulate rubber component [D], and may contain other epoxy resins.

Conventionally known epoxy resins can be used as such other epoxy resins. Specifically, epoxy resins mentioned below can be used. Among them, an epoxy resin containing an aromatic group is preferred, and an epoxy resin containing either a glycidyl amine structure or a glycidyl ether structure is preferred. An alicyclic epoxy resin can also be suitably used.

Examples of the epoxy resin containing a glycidyl amine structure include various isomers of tetraglycidyl diaminodiphenyl methane.

Examples of the epoxy resin containing a glycidyl ether structure include a bisphenol A epoxy resin, a bisphenol F epoxy resin, a bisphenol S epoxy resin, a phenol novolac epoxy resin, and a cresol novolac epoxy resin.

These epoxy resins may have a non-reactive substituent in an aromatic ring structure or the like as necessary. Examples of the non-reactive substituent include alkyl groups such as a methyl group, an ethyl group, and an isopropyl group, aromatic groups such as a phenyl group, an alkoxyl group, an aralkyl group, and halogen groups such as chlorine and bromine.

The epoxy resin composition of the present invention may contain other curing agents.

Examples of such other curing agents include aliphatic polyamines, various isomers of aromatic amine curing agents (excluding the curing agent [C]), aminobenzoic acid esters, and acid anhydrides.

Examples of the aliphatic polyamines include 4,4'-diaminodicyclohexylmethane, isophoronediamine, and m-xylylenediamine.

Aromatic polyamines are preferred because they are excellent in heat resistance and various mechanical properties. Examples of the aromatic polyamines include diaminodiphenyl sulfones, diaminodiphenyl methanes, diaminodiphenyl ethers, and toluenediamines. Aromatic diamine compounds such as 4,4'-diaminodiphenyl sulfone, 3,3'-diaminodiphenyl sulfone, and 4,4'-diaminodiphenyl methane as well as derivatives thereof having a non-reactive substituent are particularly preferred because they can provide a cured product having high heat resistance. Moreover, 3,3'-diaminodiphenyl sulfone is more preferred because it can provide a cured resin having high heat resistance and high elastic modulus. Examples of the non-reactive substituent include alkyl groups such as a methyl group, an ethyl group, and an isopropyl group, aromatic groups such as a phenyl group, an alkoxyl group, an aralkyl group, and halogen groups such as chlorine and bromine.

As the aminobenzoic acid esters, trimethylene glycol di-p-aminobenzoate or neopentyl glycol di-p-aminobenzoate is preferably used. A composite material obtained by curing the resins using these curing agents has a high tensile elongation.

Examples of the acid anhydrides include 1,2,3,6-tetrahydrophthalic anhydride, hexahydrophthalic anhydride, and 4-methylhexahydrophthalic anhydride. When these curing agents are used, the uncured resin composition has a long pot life, and a cured product having relatively well-balanced electrical properties, chemical properties, mechanical properties, and the like is obtained. Therefore, the curing agents are appropriately selected according to the application of the composite material.

The total amount of the curing agents contained in the epoxy resin composition is an amount suitable for curing all the epoxy resins blended in the epoxy resin composition, and is appropriately adjusted according to the type of the used epoxy resins and curing agents. For example, when an aromatic diamine compound is used as a curing agent, the total amount of the curing agents is preferably 25 to 65 parts by mass, and more preferably 35 to 55 parts by mass with respect to 100 parts by mass of the total amount of the epoxy resins.

The epoxy resin composition of the present invention may contain a thermoplastic resin. The thermoplastic resin improves the fracture toughness and impact resistance of the obtained fiber-reinforced composite material.

Specific examples of the thermoplastic resin include polyethersulfones, polysulfones, polyetherimides, and polycarbonates. These may be used singly or in combination of two or more thereof. The thermoplastic resin contained in the epoxy resin composition is particularly preferably a polyethersulfone or polysulfone having a weight average molecular weight (Mw) of 8,000 to 100,000 as measured by gel permeation chromatography. If the weight average molecular weight (Mw) is less than 8,000, the obtained FRP has insufficient impact resistance, whereas if the weight average molecular weight (Mw) is more than 100,000, the epoxy resin composition may have a remarkably high viscosity and may be remarkably deteriorated in handleability. The epoxy resin-soluble thermoplastic resin preferably has a uniform molecular weight distribution. In particular, the thermoplastic resin preferably has a polydispersity (Mw/Mn) in the range of 1 to 10, where the polydispersity is the ratio of the weight average molecular weight (Mw) to the number average molecular weight (Mn). The polydispersity is more preferably in the range of 1.1 to 5.

The thermoplastic resin preferably has a reactive group that is reactive with the epoxy resin, or a functional group that forms a hydrogen bond with the epoxy resin. Such a thermoplastic resin can have improved dissolution stability during the curing process of the epoxy resin. In addition, the thermoplastic resin can impart fracture toughness, chemical resistance, heat resistance, and wet heat resistance to the fiber-reinforced composite material obtained after curing.

The reactive group that is reactive with the epoxy resin is preferably a hydroxyl group, a carboxylic acid group, an imino group, an amino group, or the like. Use of a polyethersulfone having a hydroxyl group at the terminal is more preferred because the obtained fiber-reinforced composite material is particularly excellent in impact resistance, fracture toughness, and solvent resistance.

The content of the thermoplastic resin in the epoxy resin composition is appropriately adjusted according to the viscosity of the epoxy resin composition. From the viewpoint of impregnation into the fiber-reinforced material, the content of the thermoplastic resin is preferably 0.1 to 10 parts by mass, and more preferably 0.5 to 5 parts by mass with respect to 100 parts by mass of the epoxy resins contained in the epoxy resin composition. If the content of the thermoplastic resin is less than 0.1 parts by mass, the obtained fiber-reinforced composite material may have insufficient fracture toughness or impact resistance. If the content of the thermoplastic resin is high, the epoxy resin composition may have a remarkably high viscosity and may be insufficiently impregnated into the fiber-reinforced material, and the obtained fiber-reinforced composite material may be deteriorated in properties.

The thermoplastic resin preferably contains a reactive aromatic oligomer having an amine terminal group (hereinafter, the oligomer is also simply referred to as "aromatic oligomer").

The epoxy resin composition is increased in the molecular weight during thermal curing by a curing reaction between the epoxy resin and the curing agent. As the two-phase region expands due to the increase in molecular weight, the aromatic oligomer dissolved in the epoxy resin composition causes reaction-induced phase separation. The phase separation forms, in the matrix resin, a two-phase structure of resin in which the cured epoxy resin and the aromatic oligomer are co-continuous. In addition, since the aromatic oligomer has an amine terminal group, a reaction of the amine terminal group with the epoxy resin also occurs. Since the phases in the co-continuous two-phase structure are firmly bonded to each other, the fiber-reinforced composite material is improved also in solvent resistance.

The co-continuous structure absorbs external impact on the fiber-reinforced composite material to inhibit crack propagation. As a result, the fiber-reinforced composite material produced using the epoxy resin composition containing the reactive aromatic oligomer having an amine terminal group has high impact resistance and fracture toughness.

As the aromatic oligomer, a known polysulfone having an amine terminal group or a known polyethersulfone having an amine terminal group can be used. The amine terminal group is preferably a primary amine (-NH₂) terminal group.

The aromatic oligomer blended in the epoxy resin composition preferably has a weight average molecular weight of 8,000 to 40,000 as measured by gel permeation chromatography. If the weight average molecular weight is less than 8,000, the aromatic oligomer is less effective for improving the toughness of the matrix resin. If the weight average molecular weight is more than 40,000, the resin composition has too high a viscosity, so that processing problems may easily occur such as difficulty in impregnating the reinforcing fiber base material with the resin composition.

As the aromatic oligomer, commercially available products such as "Virantage DAMS VW-30500 RP (registered trademark)" (manufactured by Solvay Specialty Polymers) can be preferably used.

The form of the thermoplastic resin is not particularly limited, but the thermoplastic resin is preferably particulate. The particulate thermoplastic resin can be uniformly blended in the resin composition.

The epoxy resin composition of the present invention may contain conductive particles, a flame retardant, an inorganic filler, and an internal mold release agent.

### 1-7. Method for producing epoxy resin composition

The epoxy resin composition of the present invention can be produced by mixing the epoxy resin [A], the epoxy resin [B], the curing agent [C], the particulate rubber component [D], and, if necessary, the epoxy resin [E], other epoxy resins, a thermoplastic resin, other curing agents, and other components. The order of mixing these components is not limited.

The epoxy resin composition may be in a one-component form in which the components are uniformly mixed, or a slurry form in which some of the components are dispersed as solids.

The method for producing the epoxy resin composition is not particularly limited, and any conventionally known method may be employed. An example of the mixing temperature is in the range of 40 to 120°C. If the mixing temperature is more than 120°C, the curing reaction partially proceeds, so that the resin impregnation properties into the reinforcing fiber base material may be deteriorated, or the resulting epoxy resin composition may be deteriorated in storage stability. If the mixing temperature is less than 40°C, the epoxy resin composition has high viscosity, and mixing may be substantially difficult. The mixing temperature is preferably 50 to 100°C, and more preferably in the range of 50 to 90°C.

As the mixing machine, a conventionally known machine can be used. Specific examples of the mixing machine include a roll mill, a planetary mixer, a kneader, an extruder, a Banbury mixer, a mixing vessel equipped with a stirring blade, and a horizontal mixing tank. The components can be mixed in the air or under an inert gas atmosphere. When the components are mixed in the air, an atmosphere with controlled temperature and humidity is preferred. Although the atmosphere is not particularly limited, for example, it is preferred to mix the components at a temperature controlled to a constant temperature of 30°C or less or in a low-humidity atmosphere having a relative humidity of 50% RH or less.

### 2. Fiber-reinforced composite material

A fiber-reinforced composite material can be obtained by forming the fiber-reinforced material and a resin composition, which is obtained by blending various components to the epoxy resin composition of the present invention, into a composite, and curing the resin composition. The method for forming the resin composition and the fiber-reinforced material into a composite is not particularly limited. The fiber-reinforced material and the resin composition may be formed into a composite in advance, or the fiber-reinforced material and the resin composition may be formed into a composite during molding as in, for example, a resin transfer molding method (RTM method), a hand lay-up method, a filament winding method, or a pultrusion method.

A fiber-reinforced composite material can be obtained by forming the fiber-reinforced material and the epoxy resin composition of the present invention into a composite, and then thermally curing the epoxy resin composition under specific conditions. Examples of the method for producing a fiber-reinforced composite material using the epoxy resin composition of the present invention include known molding methods such as an RTM method, an autoclave molding method, and a press molding method. The resin composition of the present invention is particularly suitable for the RTM method.

The RTM method is a preferred molding method from the viewpoint of efficiently obtaining a fiber-reinforced composite material having a complicated shape. Here, the RTM method means a method of impregnating a fiber-reinforced material placed in a mold with a liquid epoxy resin composition, and then curing the epoxy resin composition to produce a fiber-reinforced composite material.

In the present invention, the mold used in the RTM method may be a closed mold made of a rigid material, and it is also possible to use an open mold made of a rigid material and a flexible film (bag). In the latter case, the fiber-reinforced material can be placed between the open mold made of a rigid material and the flexible film. As the rigid material, various existing materials including metals such as steel and aluminum, fiber-reinforced plastic (FRP), wood, and gypsum are used. As a material of the flexible film, polyamides, polyimides, polyesters, fluororesins, silicone resins, and the like are used.

When a closed mold made of a rigid material is used in the RTM method, usually, the mold is clamped by pressurization, and the epoxy resin composition is injected into the mold by pressurization. In this case, it is also possible to provide a suction port separately from the injection port, and connect the suction port to a vacuum pump to suck the epoxy resin composition. It is also possible to suck the epoxy resin composition to inject the epoxy resin composition only by atmospheric pressure without using any special pressurizing means. This method can be suitably used because a large member can be produced by providing a plurality of suction ports.

In the RTM method, when an open mold made of a rigid material and a flexible film are used, it is also possible to suck the epoxy resin to inject the epoxy resin only by atmospheric pressure without using any special pressurizing means. In order to inject the epoxy resin only by atmospheric pressure to realize satisfactory impregnation, it is effective to use a resin diffusion medium. Furthermore, it is preferred to apply a gel coat to the surface of the rigid material before placing the fiber-reinforced material in the mold.

In the RTM method, the fiber-reinforced material is impregnated with the epoxy resin composition, and then the epoxy resin composition is thermally cured. The mold temperature during the thermal curing is usually selected to be higher than the mold temperature during the injection of the epoxy resin composition. The mold temperature during the thermal curing is preferably 80 to 200°C. The time for thermal curing is preferably 1 minute to 20 hours. After the thermal curing is completed, the fiber-reinforced composite material is demolded and taken out. Then, the obtained fiber-reinforced composite material may be heated at a higher temperature to be post-cured. The temperature of the post curing is preferably 150 to 200°C, and the time of the post curing is preferably 1 minute to 4 hours.

The impregnation pressure at the time of impregnating the fiber-reinforced material with the epoxy resin composition by the RTM method is appropriately determined in consideration of the viscosity, resin flow, and the like of the resin composition.

The impregnation pressure is specifically 0.001 to 10 (MPa), and is preferably 0.01 to 1 (MPa). When the fiber-reinforced composite material is obtained by the RTM method, the viscosity of the epoxy resin composition at 100°C is preferably less than 5000 mPa·s, more preferably 0.5 to 1000 mPa·s, and still more preferably 1 to 200 mPa·s.

### Examples

Hereinafter, the present invention will be described more specifically with reference to examples, but the present invention is not limited to the examples. Components and test methods used in the examples and comparative examples will be described below.

### [Components]

### (Epoxy resins)

Epoxy resin [A]
· Tetraglycidyl-3,4'-diaminodiphenyl ether (synthesized by the method of Synthesis Example 1, hereinafter abbreviated as "3, 4' -TGDDE")

Epoxy resin [B]
· N,N-diglycidyl-o-toluidine (GOT (product name) manufactured by Nippon Kayaku Co., Ltd., hereinafter abbreviated as "GOT")
· N,N-diglycidyl aniline (GAN (product name) manufactured by Nippon Kayaku Co., Ltd., hereinafter abbreviated as "GAN")

Epoxy resin [E]
· Triglycidyl-p-aminophenol (Araldite MY0510 (product name) manufactured by Huntsman Corporation, hereinafter abbreviated as "TG-pAP")

Other epoxy resins
· Tetraglycidyl-4,4'-diaminodiphenyl methane (Araldite MY721 (product name) manufactured by Huntsman Corporation, hereinafter abbreviated as "TGDDM")
· Bisphenol A-diglycidyl ether (jER 825 (product name) manufactured by Mitsubishi Chemical Corporation, hereinafter abbreviated as "DGEBA")

### (Curing agents)

Curing agent [C]
· 4,4'-Diamino-3,3'-diisopropyl-5,5'-dimethyldiphenylmethane (Lonzacure M-MIPA (product name) manufactured by Lonza Group Ltd., hereinafter abbreviated as "M-MIPA")
· 4,4'-Methylenebis(3-chloro-2,6-diethylaniline) (Lonzacure M-CDEA (product name) manufactured by Lonza Group Ltd., hereinafter abbreviated as "M-CDEA")
· Diethyltoluenediamine (Aradure 5200 (product name) manufactured by Huntsman Corporation, hereinafter abbreviated as "DETDA")

### (Other curing agent)

· 3,3'-Diaminodiphenyl sulfone (manufactured by Konishi Chemical Ind. Co., Ltd., hereinafter abbreviated as "3,3'-DDS")

### (Particulate rubber component)

· MX-416 (MX-416 (product name) manufactured by KANEKA CORPORATION, a masterbatch that is a dispersion in a tetrafunctional glycidyl amine epoxy resin and has a particulate rubber component concentration of 25 mass%)

### (Carbon fiber strand)

· Carbon fibers 1: "Tenax (registered trademark)" IMS65 E23 830 tex (a carbon fiber strand, tensile strength: 5.8 GPa, tensile elastic modulus: 290 GPa, sizing agent adhesion amount: 1.2 mass%, manufactured by TEIJIN LIMITED)

### (Thermoplastic resin nonwoven fabric)

· Nonwoven fabric 1: a nonwoven fabric having a fiber basis weight of 5 g/m² and produced by a spunbonding method using a polyamide 12 resin

### (Carbon fiber multilayer fabrics)

· Carbon fiber multiaxial fabric 1: a product obtained by forming the carbon fibers 1 aligned in one direction into a sheet of 190 g/m² per layer, placing the nonwoven fabric 1 on one side of the sheet, stacking four sheets of the resulting laminate at angles of (+45/V/90/V/-45/V/0/V), and stitching the resulting laminate (total basis weight of carbon fibers of the fabric base material: 760 g/m²).
· Carbon fiber multiaxial fabric 2: a product obtained by stacking four sheets of the carbon fibers 1 at angles of (-45/V/90/V/+45/V/0/V), and stitching the resulting laminate (total basis weight of carbon fibers of the fabric base material: 760 g/m²).

Here, V represents the nonwoven fabric 1.

### (Synthesis example of epoxy resin)

### [Synthesis Example 1] Synthesis of 3,4'-TGDDE

Into a four-necked flask equipped with a thermometer, a dropping funnel, a cooling tube, and a stirrer, 1110.2 g (12.0 mol) of epichlorohydrin was charged, and the temperature was raised to 70°C under nitrogen purge. To the flask, 200.2 g (1.0 mol) of 3,4'-diaminodiphenyl ether dissolved in 1000 g of ethanol was added dropwise over 4 hours. The resulting mixture was further stirred for 6 hours to complete the addition reaction, thereby obtaining N,N,N' ,N'-tetrakis(2-hydroxy-3-chloropropyl)-3,4'-diaminodiphenyl ether. Subsequently, the temperature in the flask was lowered to 25°C, and then 500.0 g (6.0 mol) of a 48% aqueous NaOH solution was added dropwise thereto over 2 hours, and the mixture was further stirred for 1 hour. After completion of the cyclization reaction, ethanol was distilled off, extraction was performed with 400 g of toluene, and washing was performed twice with 5% saline. Removal of toluene and epichlorohydrin from the organic layer under reduced pressure gave 361.7 g of a brown viscous liquid (yield: 85.2%). The main product 3,4'-TGDDE had a purity of 84% (HPLC area%).

### [Evaluation methods]

### (1) Properties of resin compositions

### (1-1) Preparation of epoxy resin compositions

Epoxy resins, curing agents, and a particulate rubber component were weighed at each of the ratios shown in Table 1 and mixed at 80°C for 60 minutes using a stirrer to prepare each epoxy resin composition. In this case, the curing agents are dissolved in the epoxy resins. In the compositions shown in Table 1, glycidyl groups of the epoxy resins and amino groups of the curing agents are equivalent.

### (1-2) Initial viscosity and pot life

The viscosity was measured under the condition of 100°C using a B-type viscometer TVB-15M manufactured by Toki Sangyo Co., Ltd. The minimum measured value immediately after the start of the measurement was taken as the initial viscosity, and the time when the viscosity reached 150 mPa·s was taken as the pot life.

### (2) Properties of cured resins

### (2-1) Production of cured resins

Each of the epoxy resin compositions prepared in (1-1) was defoamed in vacuum, and then injected into a stainless steel mold that was set so as to produce a cured resin having a thickness of 4 mm with a 4 mm-thick silicon resin spacer. The epoxy resin composition was cured at a temperature of 180°C for 2 hours to produce a cured resin having a thickness of 4 mm.

### (2-2) Flexural modulus of resins

A test was performed according to the method of JIS K 7171. At that time, each resin test piece was prepared to have dimensions of 80 mm × 10 mm × h 4 mm. A bending test was performed at a distance L between fulcrums of 16 × h (thickness) and a test speed of 2 m/min, and the flexural strength and the flexural modulus were measured.

### (3) Properties of CFRPs

### (3-1) Production of CFRPs

The carbon fiber multiaxial fabric 1 and the carbon fiber multiaxial fabric 2 were each cut into 300 × 300 mm. On a 500 × 500 mm release-treated aluminum plate, three sheets of the carbon fiber multiaxial fabric 1 and three sheets of the carbon fiber multiaxial fabric 2 were stacked to form a laminate of six sheets in total.

Moreover, a peel cloth Release Ply C (manufactured by AIRTECH JAPAN, LTD.) as a base material having a releasable function and Resin Flow 90HT (manufactured by AIRTECH JAPAN, LTD.) as a resin diffusion base material were stacked on the laminate. Then, a hose for forming a resin injection port and a resin discharge port was placed, the whole product was covered with a nylon bag film and sealed with a sealant tape, and the inside of the nylon bag film was evacuated. Subsequently, the aluminum plate was warmed to 120°C, the pressure in the bag was reduced to 5 torr or less, and then each of the epoxy resin compositions prepared in (1-1) was heated to 100°C and injected into the vacuum system through the resin injection port.

The bag was filled with the injected epoxy resin composition, the temperature was raised to 180°C in a state in which the laminate was impregnated with the epoxy resin composition, and the laminate was held at 180°C for 2 hours to produce a carbon fiber composite material.

### (3-2) OHC

Each of the CFRPs obtained in (3-1) was cut into a test piece having dimensions of 38.1 mm wide × 304.8 mm long, and punched with a diameter of 6.35 mm at the center of the test piece to produce a test piece for an open hole compression (OHC) test.

The test was performed according to SACMA SRM 3, and the open hole compression strength was calculated from the maximum point load.

### (3-3) Compression after impact (CAI)

Each of the CFRPs obtained in (3-1) was cut into a test piece having dimensions of 101.6 mm wide × 152.4 mm long to produce a test piece for a compression after impact (CAI) test. After the dimensions of each test piece were measured, the specimen (sample) was subjected to an impact test by the application of an impact energy of 30.5 J using Falling Weight Impact Machine (Dynatup manufactured by Instron Corporation). After the application of the impact, the damaged area of the specimen was measured with an ultrasonic flaw detector (SDS 3600, HIS3/HF manufactured by Krautkramer Japan Co., Ltd.). After the application of the impact, for the strength test of the specimen, one strain gauge was attached to each of the left and right of the specimen at a position of 25.4 mm from the top of the specimen and 25.4 mm from the side of the specimen, and similarly attached to each of the front and back surfaces of the specimen, so that a total of four strain gauges/specimen were attached. Then, a tester (Autograph manufactured by Shimadzu Corporation) was adjusted to have a crosshead speed of 1.27 mm/min, and a load was applied until the specimen was broken.

### (Resin compositions)

### [Examples 1 to 11 and Comparative Example 3]

Properties of the epoxy resin compositions are shown in Table 1. The epoxy resin compositions of Examples 1 to 11 had a low initial viscosity of 100 mPa·s or less at 100°C and a long pot life of 180 minutes or more. In Comparative Example 3, 3,3'-DDS was used and the curing agent [C] was not used. The epoxy resin composition had an initial viscosity as high as 115 mPa·s and a pot life as short as 111 minutes.

### (Cured resins)

### [Examples 1 to 11 and Comparative Examples 1 and 2]

Properties of the cured resins are shown in Table 1. The cured resins of Examples 1 to 11 had a high flexural modulus of 3.6 GPa or more. In Comparative Example 1, TGDDM was used and the epoxy resin [A] was not used. The cured resin had a flexural modulus as low as 3.4 GPa. In Comparative Example 2, DGEBA was used and the epoxy resin [B] was not used. The cured resin had a flexural modulus as low as 3.2 GPa.

### (CFRPs)

### [Examples 1 to 11 and Comparative Examples 1 to 2 and 4]

Properties of the CFRPs are shown in Table 1. The CFRPs of Examples 1 to 11 had a high OHC strength of 300 MPa or more and a high CAI of 230 MPa or more. In Comparative Example 1, TGDDM was used and the epoxy resin [A] was not used. The CFRP had an OHC strength as low as 293 MPa. In Comparative Example 2, DGEBA was used and the epoxy resin [B] was not used. The CFRP had an OHC strength as low as 281 MPa. In Comparative Example 4, the particulate rubber particles [D] were not used. The CFRP had a CAI as low as 214 MPa.

**[Table 1]**

| | | Examples (parts by mass) | | | | | | | | | | | Comparative Examples (parts by mass) | | | |
|---|---|---|---|---|---|---|---|---|---|---|---|---|---|---|---|---|
| | | 1 | 2 | 3 | 4 | 5 | 6 | 7 | 8 | 9 | 10 | 11 | 1 | 2 | 3 | 4 |
| Epoxy resin [A] | 3,4'-TGDDE | 100 | 100 | 100 | 100 | 100 | 100 | 100 | 100 | 100 | 100 | 100 | 0 | 100 | 100 | 100 |
| Epoxy resin [B] | GOT | 71 | 61 | 51 | 0 | 0 | 0 | 0 | 0 | 0 | 58 | 58 | 71 | 0 | 69 | 43 |
| | GAN | 0 | 0 | 0 | 71 | 61 | 51 | 91 | 78 | 65 | 0 | 0 | 0 | 0 | 0 | 0 |
| Epoxy resin [E] | TG-pAP | 0 | 10 | 20 | 0 | 10 | 20 | 0 | 13 | 26 | 10 | 10 | 0 | 0 | 0 | 0 |
| Other epoxy resins | TGDDM | 0 | 0 | 0 | 0 | 0 | 0 | 0 | 0 | 0 | 0 | 0 | 100 | 0 | 0 | 0 |
| | DGEBA | 0 | 0 | 0 | 0 | 0 | 0 | 0 | 0 | 0 | 0 | 0 | 0 | 70 | 0 | 0 |
| Curing agent [C] | M-MIPA | 133 | 135 | 137 | 138 | 139 | 141 | 178 | 180 | 182 | 0 | 26 | 134 | 120 | 0 | 94 |
| | M-CDEA | 0 | 0 | 0 | 0 | 0 | 0 | 0 | 0 | 0 | 0 | 0 | 0 | 0 | 0 | 0 |
| | DETDA | 0 | 0 | 0 | 0 | 0 | 0 | 0 | 0 | 0 | 74 | 60 | 0 | 0 | 0 | 0 |
| Other curing agent | 3,3'-DDS | 0 | 0 | 0 | 0 | 0 | 0 | 0 | 0 | 0 | 0 | 0 | 0 | 0 | 105 | 0 |
| Particulate rubber component [D] | MX-416 | 41 | 42 | 42 | 42 | 42 | 43 | 92 | 93 | 93 | 33 | 35 | 42 | 40 | 37 | 0 |
| Ratio between components | Total amount of epoxy resins (parts by mass) | 201 | 202 | 202 | 202 | 203 | 203 | 260 | 261 | 261 | 192 | 194 | 202 | 200 | 197 | 143 |
| | Percentage of epoxy resin [A] (mass%) | 50 | 50 | 49 | 49 | 49 | 49 | 38 | 38 | 38 | 52 | 52 | 0 | 50 | 51 | 70 |
| | Percentage of epoxy resin [B] (mass%) | 35 | 30 | 25 | 35 | 30 | 25 | 35 | 30 | 25 | 30 | 30 | 35 | 0 | 35 | 30 |
| | Particulate rubber component | 3.0 | 3.0 | 3.0 | 3.0 | 3.0 | 3.0 | 5.0 | 5.0 | 5.0 | 3.0 | 3.0 | 3.0 | 3.0 | 3.0 | 0.0 |
| Properties of resin composition | Initial viscosity @100°C (mPa·s) | 31 | 34 | 36 | 37 | 39 | 39 | 41 | 43 | 45 | 20 | 22 | 33 | 59 | 115 | 30 |
| | Pot life (min) | >300 | >300 | >300 | >300 | >300 | 273 | 299 | 276 | 260 | 190 | 215 | >300 | 186 | 111 | >300 |
| Properties of cured resin | Flexural modulus (GPa) | 3.7 | 3.6 | 3.6 | 3.9 | 3.8 | 3.6 | 3.6 | 3.7 | 3.6 | 3.7 | 3.6 | 3.4 | 3.2 | 4.5 | 3.6 |
| Properties of CFRP | OHC (MPa) | 310 | 308 | 308 | 315 | 312 | 308 | 308 | 310 | 308 | 310 | 308 | 293 | 281 | 325 | 308 |
| | CAI (MPa) | 314 | 295 | 266 | 260 | 270 | 255 | 332 | 330 | 328 | 230 | 245 | 276 | 306 | 254 | 214 |

## Claims

1. An epoxy resin composition comprising:
an epoxy resin [A] that is a compound represented by Chemical formula (1) shown below: 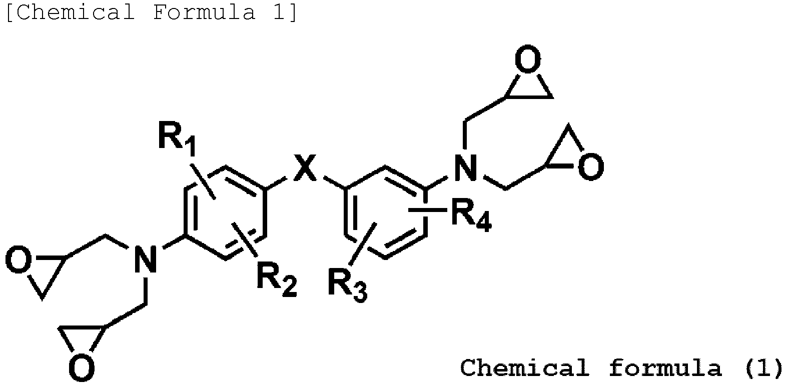
wherein R₁ to R₄ each independently represent one selected from the group consisting of a hydrogen atom, an aliphatic hydrocarbon group, an alicyclic hydrocarbon group, and a halogen atom, and X is -O-;
a bifunctional epoxy resin [B] having an amine type glycidyl group;
a curing agent [C] containing an aromatic polyamine, and having at least one substituent selected from an aliphatic substituent, an aromatic substituent, and a halogen atom at an ortho position with respect to an amino group; and
a particulate rubber component [D].

2. The epoxy resin composition according to claim 1, comprising an epoxy resin [E] containing a triglycidylaminophenol derivative.

3. The epoxy resin composition according to claim 1 or 2, wherein the bifunctional epoxy resin [B] is diglycidyl aniline or diglycidyl-o-toluidine.

4. The epoxy resin composition according to any one of claims 1 to 3, wherein the curing agent [C] is a 4,4'-diaminodiphenyl methane derivative and/or a phenylenediamine derivative.

5. The epoxy resin composition according to any of claims 1 to 4, wherein the curing agent [C] is a 4,4'-diaminodiphenyl methane derivative.

6. The epoxy resin composition according to any one of claims 2 to 5, wherein the epoxy resin [E] is triglycidyl-p-aminophenol or triglycidyl-m-aminophenol.

7. The epoxy resin composition according to any one of claims 1 to 6, wherein a percentage content of the bifunctional epoxy resin [B] in all epoxy resins is 5 to 40 mass%.

8. The epoxy resin composition according to any one of claims 1 to 7, wherein the epoxy resin [A] is tetraglycidyl-3,4'-diaminodiphenyl ether.

9. A cured resin that is a cured product of the epoxy resin composition according to any one of claims 1 to 8.

10. A fiber-reinforced composite material comprising:
the cured resin according to claim 9, the cured resin being the cured product of the epoxy resin composition; and
a fiber-reinforced material.

11. The fiber-reinforced composite material according to claim 10, wherein the fiber-reinforced material is a carbon fiber-reinforced material.

12. A method for producing a fiber-reinforced composite material, the method comprising forming a fiber-reinforced material and the epoxy resin composition according to any one of claims 1 to 8 into a composite, and curing the epoxy resin composition.

13. A method for producing a fiber-reinforced composite material, the method comprising a step of impregnating a fiber-reinforced material placed in a mold with the epoxy resin composition according to any one of claims 1 to 8, and then thermally curing the epoxy resin composition.

## Patentansprüche

1. Epoxidharzzusammensetzung, umfassend:
ein Epoxidharz [A], bei dem es sich um eine Verbindung handelt, die durch die unten gezeigte chemische Formel (1) wiedergegeben wird: 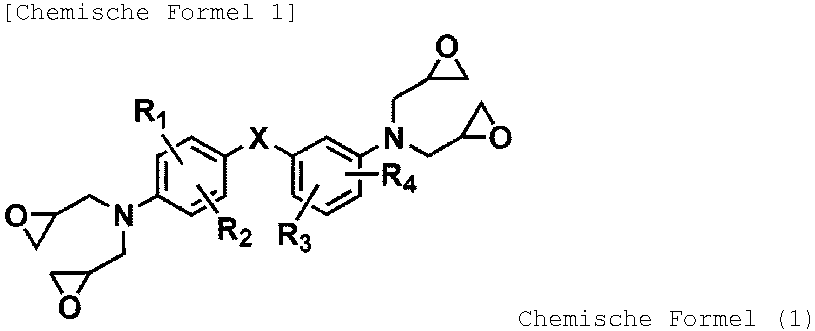
wobei R₁ bis R₄ jeweils unabhängig voneinander für eines aus der Gruppe bestehend aus einem Wasserstoffatom, einer aliphatischen Kohlenwasserstoffgruppe, einer alicyclischen Kohlenwasserstoffgruppe und einem Halogenatom ausgewählt sind, stehen und es sich bei X um -O- handelt;
ein bifunktionelles Epoxidharz [B] mit einer Glycidylgruppe vom Amin-Typ;
ein Härtungsmittel [C], das ein aromatisches Polyamin enthält und mindestens einen Substituenten aufweist, der aus einem aliphatischen Substituenten, einem aromatischen Substituenten und einem Halogenatom in ortho-Stellung zu einer Aminogruppe ausgewählt ist; und
eine teilchenförmige Kautschukkomponente [D].

2. Epoxidharzzusammensetzung nach Anspruch 1, umfassend ein Epoxidharz [E], das ein Triglycidylaminophenol-Derivat enthält.

3. Epoxidharzzusammensetzung nach Anspruch 1 oder 2, wobei es sich bei dem bifunktionellen Epoxidharz [B] um Diglycidylanilin oder Diglycidyl-O-toluidin handelt.

4. Epoxidharzzusammensetzung nach einem der Ansprüche 1 bis 3, wobei es sich bei dem Härtungsmittel [C] um ein 4,4'-Diaminodiphenylmethan-Derivat und/oder ein Phenylendiamin-Derivat handelt.

5. Epoxidharzzusammensetzung nach einem der Ansprüche 1 bis 4, wobei es sich bei dem Härtungsmittel [C] um ein 4,4'-Diaminodiphenylmethan-Derivat handelt.

6. Epoxidharzzusammensetzung nach einem der Ansprüche 2 bis 5, wobei es sich bei dem Epoxidharz [E] um Triglycidyl-p-aminophenol oder Triglycidyl-m-aminophenol handelt.

7. Epoxidharzzusammensetzung nach einem der Ansprüche 1 bis 6, wobei ein Prozentgehalt des bifunktionellen Epoxidharzes [B] in allen Epoxidharzen 5 bis 40 Massen-% beträgt.

8. Epoxidharzzusammensetzung nach einem der Ansprüche 1 bis 7, wobei es sich bei dem Epoxidharz [A] um Tetraglycidyl-3,4'-diaminodiphenylether handelt.

9. Gehärtetes Harz, das ein gehärtetes Produkt der Epoxidharzzusammensetzung nach einem der Ansprüche 1 bis 8 ist.

10. Faserverstärktes Verbundmaterial, umfassend:
das gehärtete Harz nach Anspruch 9, wobei das gehärtete Harz das gehärtete Produkt der Epoxidharzzusammensetzung ist; und
ein faserverstärktes Verbundmaterial.

11. Faserverstärktes Verbundmaterial nach Anspruch 10, wobei es sich bei dem faserverstärkten Material um ein kohlefaserverstärktes Verbundmaterial handelt.

12. Verfahren zur Herstellung eines faserverstärkten Verbundmaterials, wobei das Verfahren Bilden eines faserverstärkten Materials und der Epoxidharzzusammensetzung nach einem der Ansprüche 1 bis 8 zu einem Verbund und Härten der Epoxidharzzusammensetzung umfasst.

13. Verfahren zur Herstellung eines faserverstärkten Verbundmaterials, wobei das Verfahren einen Schritt des Imprägnierens eines faserverstärkten Materials, das in eine Form eingebracht wurde, mit der Epoxidharzzusammensetzung nach einem der Ansprüche 1 bis 8 und des anschließenden thermischen Härtens der Epoxidharzzusammensetzung umfasst.

## Revendications

1. Composition de résine époxy comprenant :
une résine époxy [A] qui est un composé représenté par la formule chimique (1) ci-dessous : 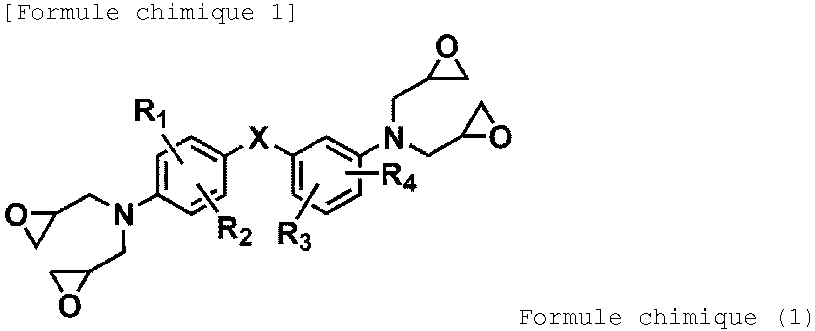
dans laquelle R₁ à R₄ représentent chacun indépendamment l'un choisi dans le groupe constitué par un atome d'hydrogène, un groupe hydrocarboné aliphatique, un groupe hydrocarboné alicyclique et un atome d'halogène, et X est -O- ;
une résine époxy bifonctionnelle [B] ayant un groupe glycidyle de type amine ;
un agent de durcissement [C] contenant une polyamine aromatique, et ayant au moins un substituant choisi parmi un substituant aliphatique, un substituant aromatique et un atome d'halogène au niveau d'une position ortho par rapport à un groupe amino ; et
un composant caoutchouc particulaire [D].

2. Composition de résine époxy selon la revendication 1, comprenant une résine époxy [E] contenant un dérivé de triglycidylaminophénol.

3. Composition de résine époxy selon la revendication 1 ou 2, dans laquelle la résine époxy bifonctionnelle [B] est la diglycidylaniline ou la diglycidyl-o-toluidine.

4. Composition de résine époxy selon l'une quelconque des revendications 1 à 3, dans laquelle l'agent de durcissement [C] est un dérivé de 4,4'-diaminodiphénylméthane et/ou un dérivé de phénylènediamine.

5. Composition de résine époxy selon l'une quelconque des revendications 1 à 4, dans laquelle l'agent de durcissement [C] est un dérivé de 4,4'-diaminodiphénylméthane.

6. Composition de résine époxy selon l'une quelconque des revendications 2 à 5, dans laquelle la résine époxy [E] est le triglycidyl-p-aminophénol ou le triglycidyl-m-aminophénol.

7. Composition de résine époxy selon l'une quelconque des revendications 1 à 6, dans laquelle une teneur en pourcentage de la résine époxy bifonctionnelle [B] dans toutes les résines époxy est de 5 à 40 % en masse.

8. Composition de résine époxy selon l'une quelconque des revendications 1 à 7, dans laquelle la résine époxy [A] est l'éther de tétraglycidyl-3,4'-diaminodiphényle.

9. Résine durcie qui est un produit durci de la composition de résine époxy selon l'une quelconque des revendications 1 à 8.

10. Matériau composite renforcé par des fibres comprenant :
la résine durcie selon la revendication 9, la résine durcie étant le produit durci de la composition de résine époxy ; et
un matériau renforcé par des fibres.

11. Matériau composite renforcé par des fibres selon la revendication 10, dans lequel le matériau renforcé par des fibres est un matériau renforcé par des fibres de carbone.

12. Procédé de production d'un matériau composite renforcé par des fibres, le procédé comprenant la mise en forme d'un matériau renforcé par des fibres et de la composition de résine époxy selon l'une quelconque des revendications 1 à 8 en un composite, et le durcissement de la composition de résine époxy.

13. Procédé de production d'un matériau composite renforcé par des fibres, le procédé comprenant une étape d'imprégnation d'un matériau renforcé par des fibres placé dans un moule avec la composition de résine époxy selon l'une quelconque des revendications 1 à 8, et ensuite le durcissement thermique de la composition de résine époxy.
